# EUROPÄISCHE PATENTSCHRIFT

(11) **EP 1 384 241 B1**
(45) Veröffentlichungstag und Bekanntmachung des Hinweises auf die Patenterteilung: **05.03.2008**
(21) Anmeldenummer: 02714200.9
(22) Anmeldetag: 04.04.2002
(51) Int. Cl.: H01H 11/00

(54) **STROMBEGRENZENDER LEISTUNGSSCHALTER**
CURRENT LIMITING CIRCUIT BREAKER
INTERRUPTEUR DE PUISSANCE LIMITEUR DE COURANT

(30) Priorität: 28.04.2001 DE 10121052
(43) Veröffentlichungstag der Anmeldung: 28.01.2004
(73) Patentinhaber: Moeller GmbH, 53115 Bonn (DE)
(72) Erfinder: STAMMBERGER, Hartwig, 53347 Alfter (DE); DAUBE, Thomas, 47057 Duisburg (DE); WEINERT, Holger, 52078 Aachen (DE)
(86) Internationale Anmeldenummer: PCT/EP2002/003747
(87) Internationale Veröffentlichungsnummer: WO 2002/089163

(56) Entgegenhaltungen:
- DE-A- 4 426 350
- DE-A- 19 629 867
- DE-A- 19 645 822
- DE-U- 29 800 780

## Beschreibung

### Technisches Gebiet

Die Erfindung betrifft einen strombegrenzenden Leistungsschalter nach dem Oberbegriff von Anspruch 1.

### Stand der Technik

Aus der Druckschrift DE-A-19629867 ist ein derartiger Leistungsschalter mit mindestens einem Kontaktsystem, das wenigstens einen feststehenden Kontakt umfasst, welcher über einen schienenförmigen Leiter mit einer entsprechenden Anschlussklemme verbunden ist, und mit wenigstens einem um eine Achse schwenkbaren beweglichen Kontakt, welcher über einen Betätigungsmechanismus in und außer Verbindung mit dem feststehenden Kontakt bringbar ist, bekannt, wobei der feststehende Kontakt derart ausgestaltet ist, dass sich im Kurzschlussfall zwischen ihm und dem stromdurchflossenen beweglichen Kontakt elektrodynamische Abstoßkräfte ergeben, die den beweglichen Kontakt außer Verbindung von dem feststehenden Kontakt bringen. Die schienenförmigen Leiter sind wenigstens zur Hälfte schleifenförmig seitlich um den beweglichen Kontakt herumgeführt, so dass die von einem Kurzschlussstrom durchflossenen schleifenförmigen Leiterabschnitte ein zusätzliches elektrodynamisch erzeugtes öffnendes Drehmoment auf den beweglichen Kontakt über seinen gesamten Öffnungsbereich sowie ein hohes Blasfeld auf den entstehenden Lichtbogen zu seiner beschleunigten Austreibung aus dem Kontaktbereich ausüben. Die schleifenförmigen schienenförmigen Leiter haben allerdings in nachteiliger Weise einen hohen Fertigungsaufwand, damit verbundene hohe Kosten sowie eine größere Baubreite des Leistungsschalters zur Folge.

Weiterhin ist aus der Druckschrift DE-U-29800780 ein Isolierstoffgehäuse für elektrische Geräte, insbesondere für Befehls- und Meldegeräte, mit integrierten Kontaktmitteln und mit mindestens zwei unterschiedlichen Kunststoffkomponenten bekannt, wobei eine Kunststoffkomponente den äußeren Gehäuseteil bildet und nicht metallisierbar ist sowie mindestens eine weitere Kunststoffkomponente metallisierbar ist und im Inneren des Gehäuseteils elektrische Leitungsverbindungen bildet, wobei mindestens ein Bereich der metallisierten Kunststoffkomponente als federnder Kontaktarm ausgebildet ist.

### Darstellung der Erfindung

Der Erfindung liegt die Aufgabe zugrunde, für einen mit schleifenförmigen Leiterabschnitten ausgestatteten Leistungsschalter den Fertigungsaufwand und den Raumbedarf zu senken.

Ausgehend von einem strombegrenzenden Leistungsschalter der eingangs genannten Art wird die Aufgabe erfindungsgemäß durch die kennzeichnenden Merkmale des unabhängigen Anspruches gelöst, während den abhängigen Ansprüchen vorteilhafte Weiterbildungen der Erfindung zu entnehmen sind.

Die Ausführung des wenigstens einen schleifenförmigen Leiterabschnitts mit der zugehörigen seitlichen Begrenzungswand als MID (Molded Interconnect Device) wird eine vereinfachte und damit kostengünstige Fertigung durch verringerten Bearbeitungs- und Befestigungsaufwand für den schleifenförmigen Leiterabschnitts erreicht. Durch die Integration des schleifenförmigen Leiterabschnitts in die zugehörige Begrenzungswand entfällt die nach dem Stand der Technik erforderliche Isolierung gegenüber dem Kontaktraum, was zu einer Verringerung der Baubreite des Leistungsschalters führt.

Das MID lässt sich vorteilhaft als galvanisierter Kunststoffbereich des Isolierstoffgehäuses bzw. eines entsprechenden Teils des Isolierstoffgehäuses oder als hinterspritzte, vor dem Formgebungsprozess des Isolierstoffgehäuses bzw. des entsprechenden Teils direkt ins Formwerkzeug einzulegende, mit einer Leiterbahn versehene Kunststofffolie oder als direkt umspritzte metallische Leiterbahn, insbesondere aus Kupfer, ausführen. Diese Ausführungen sind mit an sich bekannte MID-Techniken realisierbar.

Eine vorteilhafte Weiterbildung der Erfindung besteht darin, dass der Verbindungsleiter zwischen feststehendem Kontakt und den Anschlussmitteln und/oder ein Teil des feststehenden Kontaktes zusammen mit dem entsprechenden, wenigstens teilweise umgebenden Kunststoff als MID ausgeführt sind.

### Kurze Beschreibung der Zeichnungen

Weitere Einzelheiten und Vorteile der Erfindung ergeben sich aus dem folgenden, anhand einer Zeichnung erläuterten Ausführungsbeispiel.

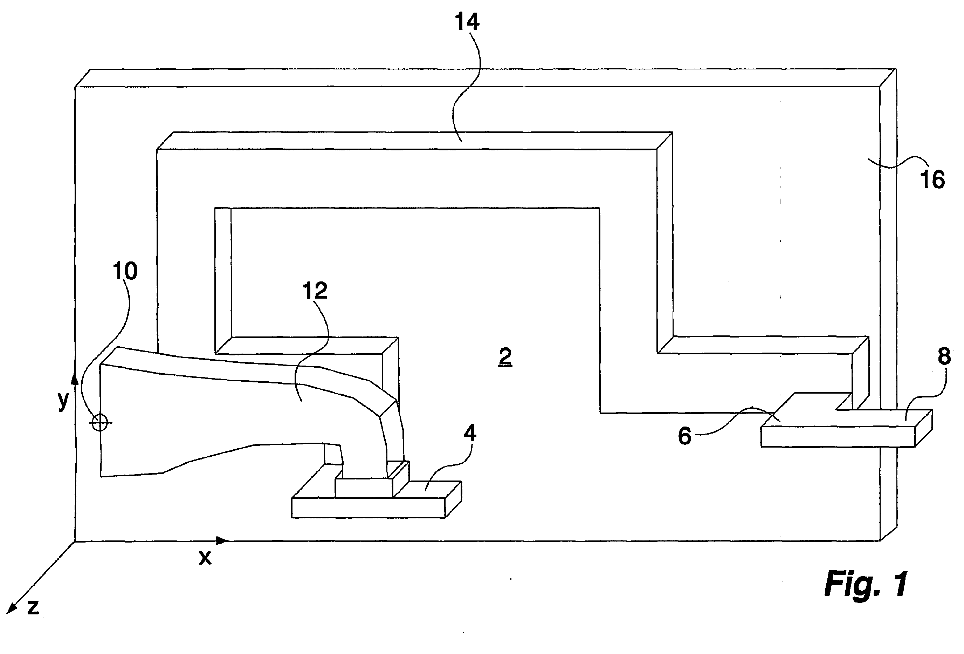

Figur 1 zeigt in vereinfachter, perspektivischer Darstellung ein Kontaktsystem eines sonst nicht weiter dargestellten erfindungsgemäßen Leistungsschalters.

### Bester Weg zur Ausführung der Erfindung

In Fig. 1 ist lediglich der vierte Teil des um die z-Achse punktsymmetrischen und zur xy-Ebene spiegelsymmetrischen Kontaktsystems 2 eines im Übrigen konventionellen Leistungsschalters dargestellt. Die z-Achse steht dabei senkrecht auf der mit der Bildebene übereinstimmenden xy-Ebene.

Das Kontaktsystem 2 umfasst zwei feststehende Kontakte 4, welche direkt bzw. auf dem Umweg über Auslösemittel jeweils über einen schienenförmigen Verbindungsleiter 6 mit entsprechenden Anschlussmitteln 8 verbunden sind. Das Kontaktsystem 2 umfasst weiterhin einen um eine Schwenkachse 10 gelagerten doppelarmigen beweglichen Kontakt 12, welcher in üblicher Weise über einen Betätigungsmechanismus in und außer Verbindung mit den feststehenden Kontakten 4 bringbar ist. Zwischen den feststehenden Kontakten 4 und den Verbindungsleitern 6 sind insgesamt vier schleifenförmige Leiterabschnitte 14 ausgebildet, welche zu beiden Seiten der gegenüber liegenden Öffnungsbereiche des zweiarmigen beweglichen Kontaktes 12 herumgeführt sind, wobei in Fig. 1 nur einer der vier Leiterabschnitte 14 dargestellt ist. Das Kontaktsystem 2 wird zu beiden Seiten von Begrenzungswänden 16 begrenzt, die Bestandteil eines Isolierstoffgehäuses des Leistungsschalters sind und gleichzeitig die Isolation zum Kontaktsystem einer benachbarten Stromphase darstellen. Die schleifenförmigen Leiterabschnitte 14 sind in die zugehörigen Begrenzungswände 16 während deren Formgebung und unter Anwendung der MID-Technik eingebettet worden.

Die vorliegende Erfindung ist nicht auf die vorstehend beschriebenen Ausführungsformen beschränkt, sondern umfasst auch alle im Sinne der Erfindung gleichwirkenden Ausführungsformen. So müssen die Leiterabschnitte 14 nicht unbedingt die in Fig. 1 gewählte Form aufweisen, sondern können auch kreisförmig oder ähnlich ausgebildet sein, solange jedenfalls durch den Leiterabschnitt 14 eine Stromschleife geformt wird, die das Öffnungsverhalten und den Lichtbogen im Kurzschlussfall im positiven Sinne beeinflusst. Die Erfindung lässt sich beispielsweise auch dahingehend weiter ausgestalten, dass die Verbindungsleiter 6 und bzw. oder Teile der feststehenden Kontakte 4 zusammen mit dem angrenzenden Kunststoff als MIDs ausgebildet sind.

## Patentansprüche

1. Strombegrenzender Leistungsschalter, enthaltend
- mindestens ein Kontaktsystem (2), das wenigstens einen feststehenden Kontakt (4) umfasst, welcher über einen schienenförmigen Verbindungsleiter (6) mit entsprechenden Anschlussmitteln (8) verbunden ist, und mit einem beweglichen Kontakt (12), welcher über einen Betätigungsmechanismus in und außer Verbindung mit dem wenigstens einen feststehenden Kontakt (4) bringbar ist, und
- wobei zwischen feststehendem Kontakt (4) und Verbindungsleiter (6) wenigstens ein seitlich um den Öffnungsbereich des beweglichen Kontaktes (12) herumgeführter schleifenförmiger Leiterabschnitt (14) angeordnet ist,
**gekennzeichnet durch**
- ein Isolierstoffgehäuse mit seitlich an das wenigstens eine Kontaktsystem (2) angrenzenden Begrenzungswänden (16), wobei
- der wenigstens eine Leiterabschnitt (14) und die zugehörige seitliche Begrenzungswand (16) einteilig als MID ausgebildet sind.

2. Strombegrenzender Leistungsschalter nach Anspruch 1, **dadurch gekennzeichnet, dass** der Leiterabschnitt (14) ein galvanisierter Abschnitt der zugehörigen Begrenzungswand (16) ist.

3. Strombegrenzender Leistungsschalter nach Anspruch 1, **dadurch gekennzeichnet, dass** der Leiterabschnitt (14) auf einer hinterspritzten Kunststofffolie angeordnet ist.

4. Strombegrenzender Leistungsschalter nach Anspruch 1, **dadurch gekennzeichnet, dass** der Leiterabschnitt (14) eine direkt umspritzte Metallbahn ist.

5. Strombegrenzender Leistungsschalter nach einem der vorstehenden Ansprüche, **dadurch gekennzeichnet, dass** der Verbindungsleiter (6) und der ihn wenigstens teilweise umschließende Kunststoff des Isolierstoffgehäuses einteilig als MID ausgebildet sind.

6. Strombegrenzender Leistungsschalter nach einem der vorstehenden Ansprüche, **dadurch gekennzeichnet, dass** ein Teil des feststehenden Kontaktes (4) und der ihn teilweise umschließende Kunststoff des Isolierstoffgehäuses einteilig als MID ausgebildet sind.

## Claims

1. Current-limiting circuit breaker, including
- at least one contact system (2) comprising at least one fixed contact (4), which is connected to corresponding connection means (8), via a track-like connecting conductor (6), and to a moving contact (12), which can be brought into and out of contact with the at least one fixed contact (4) via an actuation mechanism,
- at least one loop-type conductor portion (14), guided laterally around the opening region of the moving contact (12), being arranged between the fixed contact (4) and the connecting conductor (6),
**characterised by** an insulating material housing, with boundary walls (16) laterally adjoining the at least one contact system (2),
- the at least one conductor portion (14) and the associated lateral boundary wall (16) being formed integrally as an MID.

2. Current-limiting circuit breaker according to claim 1, **characterised in that** the conductor portion (14) is a galvanised portion of the associated boundary wall (16).

3. Current-limiting circuit breaker according to claim 1, **characterised in that** the conductor portion (14) is arranged on an injection-moulded plastics material backing film.

4. Current-limiting circuit breaker according to claim 1, **characterised in that** the conductor portion (14) is a metal rail directly encapsulated by injection-moulding.

5. Current-limiting circuit breaker according to any one of the preceding claims, **characterised in that** the connecting conductor (6) and the plastics material, surrounding said connecting conductor at least in part, of the insulating material housing, are formed integrally as an MID.

6. Current limiting circuit breaker according to any one of the preceding claims, **characterised in that** a part of the fixed contact (4) and the plastics material, surrounding said fixed contact at least in part, of the insulating material housing, are formed integrally as an MID.

## Revendications

1. Disjoncteur limiteur de courant comprenant :
- au moins un système de contact (2) comprenant au moins un contact fixe (4) relié à des moyens de connexion (8) correspondants par le biais d'un conducteur de liaison (6) en forme de rail et comprenant un contact mobile (12) qui peut être mis en liaison et hors liaison avec le au moins un contact fixe (4) par le biais d'un mécanisme d'actionnement et
- au moins une partie conductrice (14) en forme de boucle entourant latéralement la zone d'ouverture du contact mobile (12) étant située entre le contact fixe (4) et le conducteur de liaison (6),
**caractérisé par** un boîtier en matériau isolant pourvu de parois de limitation (16) contiguës latéralement au au moins un système de contact (2),
- la au moins une partie conductrice (14) et la paroi de limitation (16) latérale associée étant exécutées d'une seule pièce en tant que dispositif d'interconnexion moulé (MID).

2. Disjoncteur limiteur de courant selon la revendication 1, **caractérisé par le fait que** la partie conductrice (14) est une partie galvanisée de la paroi de limitation (16) associée.

3. Disjoncteur limiteur de courant selon la revendication 1, **caractérisé par le fait que** la partie conductrice (14) est située sur une feuille en plastique surmoulée par injection.

4. Disjoncteur limiteur de courant selon la revendication 1, **caractérisé par le fait que** la partie conductrice (14) est une bande métallique directement moulée par injection.

5. Disjoncteur limiteur de courant selon l'une des revendications précédentes, **caractérisé par le fait que** le conducteur de liaison (6) et la matière plastique du boîtier en matériau isolant qui l'entoure au moins partiellement sont exécutés d'une seule pièce en tant que dispositif d'interconnexion moulé (MID).

6. Disjoncteur limiteur de courant selon l'une des revendications précédentes, **caractérisé par le fait qu'**une partie du contact fixe (4) et la matière plastique du boîtier en matériau isolant qui l'entoure au moins partiellement sont exécutées d'une seule pièce en tant que dispositif d'interconnexion moulé (MID).
